# EUROPEAN PATENT SPECIFICATION

(11) **EP 0 553 529 B1**
(45) Date of publication and mention of the grant of the patent: **07.08.1996**
(21) Application number: 92304307.9
(22) Date of filing: 13.05.1992
(51) Int. Cl.: B65G 47/90, B23P 19/00, B23P 19/06

(54) **Apparatus for feeding nuts and the like**
Vorrichtung zum Zuführen von Muttern oder dergleichen
Dispositif pour l'alimentation des écrons et similaires

(30) Priority: 28.01.1992 JP 12641/92
(43) Date of publication of application: 04.08.1993
(73) Proprietor: AOYAMA SEISAKUSHO CO., LTD., Niwa-gun, Aichi-ken (JP)
(72) Inventor: Kazino, Hiroshi, Komaki-shi, Aichi-ken (JP)
(74) Representative: Watkins, David

(56) References cited:
- US-A- 3 780 417
- US-A- 4 729 713

## Description

### BACKGROUND OF THE INVENTION

The present invention relates to a feeding apparatus for continuously feeding nuts and the like, such as weld nuts or clinch nuts, onto a workpiece to which the nuts are installed.

A nut feeding apparatus comprising a conductor cylinder having a feeder opening provided at a lower side wall of the cylinder to which nuts and the like are continuously fed from a feeding chute, a plunger fitted in the conductor cylinder slidablely up and down having a free end for ejecting nuts and the like fed from the feeder opening, and a temporary support member for temporarily supporting nuts and the like which are fed one by one into the conductor cylinder from the feeder opening is known as disclosed in Examined Japanese Patent Publication Nos. 52-22718 and 52-57486. However, the conventional nut feeding apparatus is designed to release the temporary support member by the action of nuts and the like ejected by the plunger, giving rise to various problems, such as nuts and the like being scratched by direct contact with the temporary support member or being unable to be held horizontal.

It is therefore an object of the present invention to provide an inexpensive nut feeding apparatus which does not have the above shortcoming and which can surely and easily feed nuts and the like, temporarily supported in a conductor cylinder, to an underlying workpiece one by one, without scratching them by the downward stress or the like of a plunger.

To achieve this object, a feeding apparatus according to the present invention for feeding nuts or the like, comprises:
a conductor cylinder having a feeder opening provided at a lower side wall of the conductor cylinder and into which nuts or the like are continuously fed;
a plunger slidably received in the conductor cylinder for up and down movement in the conductor cylinder, and
support means in the conductor cylinder for temporarily supporting nuts or the like fed into the conductor cylinder from the feeder opening;
and is characterised in that:
support bar guide holes are provided in said conductor cylinder for receiving support bars which serve temporarily to support nuts or the like fed into the conductor cylinder from the feeder opening;
ball recesses are formed in the conductor cylinder and located above the support bar guide holes;
balls having a diameter slightly larger than the thickness of a wall of the conductor cylinder are accommodated in respective said ball recesses;
leaf springs are attached to an outer surface of the conductor cylinder;
first and second support bars are slidably mounted in the support bar guide holes for temporarily and horizontally supporting a single nut or the like fed into the conductor cylinder from the feeder opening, each support bar having an outer end portion coupled to an associated one of the leaf springs, the leaf springs urging the respective support bars inwardly toward the interior of the conductor cylinder;
wherein the plunger has guide grooves at a lower portion thereof for engaging the balls and pushing the engaged balls outward of the conductor cylinder when the plunger is moved downwardly in the conductor cylinder, thereby causing the support bars to release a supported nut or the like and to eject the released nut or the like from the conductor cylinder.

### BRIEF DESCRIPTION OF THE DRAWINGS

Fig. 1 is a partly cutaway front view of one embodiment of the present invention, illustrating nuts and the like being temporarily supported;
Fig. 2 illustrates a nut feeding apparatus in Fig. 1, with the temporary support of nuts and the like being released.
Fig. 3 is a partly cutaway view showing the relationship between leaf springs and support bars.

### DETAILED DESCRIPTION OF THE PREFERRED EMBODIMENT

Referring to the accompanying drawings, a nut feeding apparatus according to a preferred embodiment of the present invention, which feeds clinch nuts, will be described in detail below.

A conductor cylinder 1 is provided at its lower side wall with a feeder opening 2 which is connected to a feeding chute for continuously supplying nuts and the like into the conductor cylinder 1, support bar guide holes 3 for receiving support bars (to be described later) for temporarily supporting the nuts and the like fed from the feeder opening 2, and ball recesses 4 located above the support bar guide holes 3. Balls 5 having a diameter slightly larger than the thickness of the wall of the conductor cylinder 1 are fitted in the respective ball recesses 4.

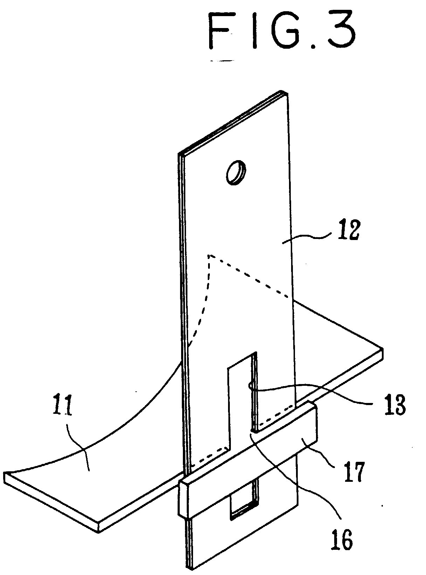

A pair of support bars 11, which are to be inserted slidable in the support bar guide holes 3, temporarily and horizontally support nuts and the like fed into the conductor cylinder 1 from the feeder opening 2, piece by piece. Each support bar 11 has an arc shape edge to match the shape of the bodies of nuts and the like. Leaf springs 12 are attached to the outer surface of the conductor cylinder 1 so as to close the ball recesses 4 from the outer side. Leaf springs 12 are attached by means of set screws 15 fitted in screw holes 14 formed at the upper portion of the conductor cylinder 1. As shown in Fig. 3, longitudinally elongated engagement holes 13 are provided in the center portions of the leaf springs 12. The attachment/detachment of the leaf springs 12 can be surely and easily conducted by inserting horizontally elongated projected parts 17 provided side by side in association with the engagement holes 13 and then turning the projected parts 17 90 degrees for engagement or disengagement. The elastic repulsion of the leaf springs 12 always permits the ends of the support bars 11 to perform a nut holding function in the conductor cylinder 1, and keeps the balls 5 fitted in the ball recesses 4 usually slightly projecting inward from the hole surfaces. The leaf springs 12 in this embodiment are each formed by a lamination of multiple thin spring steel plates to provide sufficient durability. Two 0.2-mm thick spring steel plates are laminated one on the other in this embodiment. The nut size is M6.

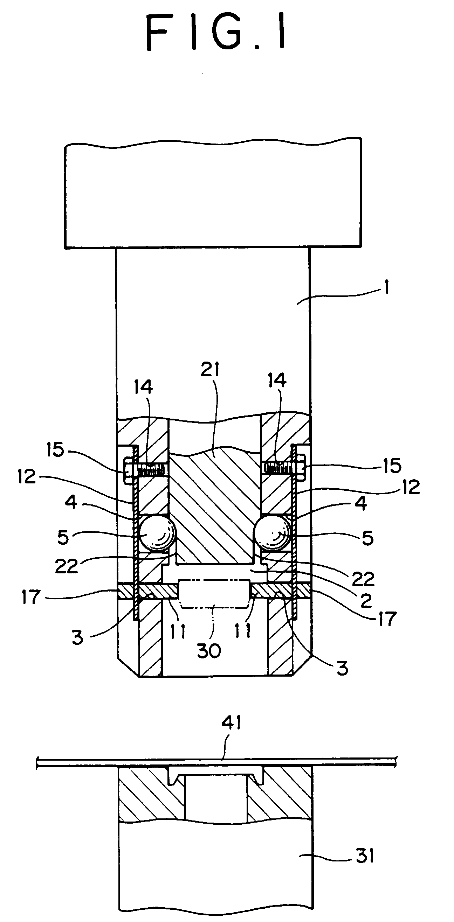

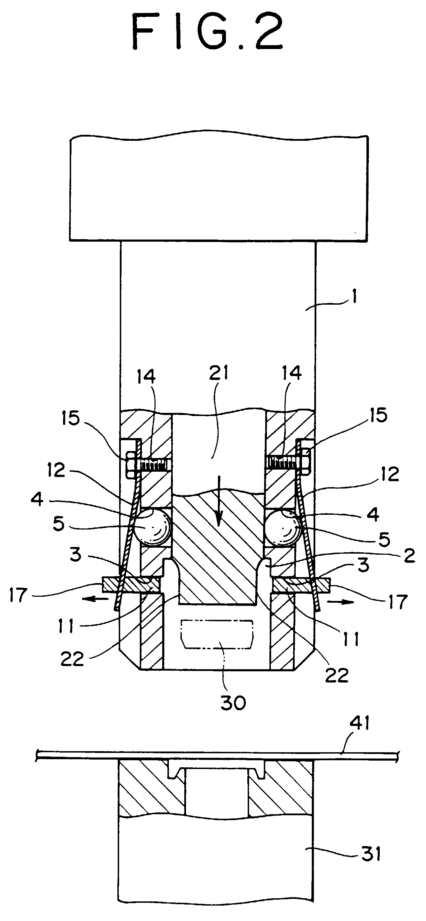

A plunger 21 is fitted slidablely up and down in the conductor cylinder 1 to eject nut and the like 30 temporarily supported horizontal inside the feeder opening 2 by the support bars 11. The lower end of the plunger 21 is usually located above the upper end of the feeder opening 2. Guide grooves 22 for guiding the balls 5 are formed in the opposite sides of the lower portion of the plunger 21 through the lower end. As shown in Fig. 2, when this plunger 21 slides down and both guide grooves 22 abut on the respective balls 5, pushing the balls outward, the support bars 11 whose ends lie in the conductor cylinder 1 to perform the nut holding function due to the force of the leaf springs 12 retract along the support bar guide holes 3, impairing the nut holding function. The nut and the like 30 is therefore pushed downward. When the plunger 21 rises, the retracted support bars 11 protrude together with the balls 5 again into the conductor cylinder 1 by the elastic repulsion of the leaf springs 12, regaining the nut holding function. In Fig. 1, reference numeral 31 denotes a support member for a workpiece, which is provided under the conductor cylinder 1; this support member 31 serves as a lower electrode when the plunger 21 serves as an upper electrode of a weld nut.

It is preferable that the timing for the support member 11 to release the nut and the like 30 is immediately before the plunger 21 hits on the top of the nut and the like 30. It is also preferable that the inner diameter of the opening of the conductor cylinder 1 where the released nut or the like drops is slightly larger than the outer diameter of the nut and the like; for example, the inner diameter is ⌀14.7 to the nut's outer diameter of ⌀14.5. Both recommendations are for stabilizing the posture of the dropping nut and the like 30.

With the above structure, when the plunger 21 is moved up to put the support bars 11 together with the balls 5 into the conductor cylinder 1 by the elastic repulsion of the leaf springs 12 to enable the nut holding function of the support bars 11, and one nut and the like 30 is fed from the feeder opening 2 continuous to the lower side wall of the conductor cylinder 1, the nut and the like 30 is kept supported horizontally by the support bars 11. When the plunger 21 is moved downward, the two guide grooves 22 formed in the plunger 21 abut on the respective balls 5 to push the balls 5 outward with the lowering of the plunger 21. The support bars 11 retract outward while holding the nut and the like 30 horizontal by the leaf springs 12. The nut and the like 30 finally looses the support and makes free fall, under the guide of the conductor cylinder 1, on a workpiece 41 held by the support member 31. Therefore, the nut and the like 30 can surely be fed to the workpiece 41.

When the plunger 21 is moved up after feeding a single nut and the like 30 to the workpiece in this manner, the support bars 11 together with the balls 5 protrude into the conductor cylinder 1 due to the elastic repulsion of the leaf springs 12, automatically recovering the initial state to cause the support bars 11 to temporarily support the next nut and the like 30 fed from the feeder opening 2. Thereafter, the same steps will be repeated.

As apparent from the foregoing description of this embodiment, the traction and retraction of the support bars holding a nut and the like is accomplished without the action of any nut and the like dropped by the plunger, preventing the support bars from wearing out and allowing nuts and the like to always keep the proper posture. Further, there is no chance of nuts and the like to be stuck in the lower opening portion of the conductor cylinder or to be scratched. Furthermore, since the support bars, which support a nut and the like horizontally, retract while keeping the horizontal state, the nut and the like will not tilt while during releasing of the temporary support by the support bars. This can ensure accurate feeding of nuts and the like to the proper position and thus significantly reduce the occurrence of defects, improving the product yield.

In short, the present invention overcomes the inherent problem of this type of conventional apparatus for feeding nuts and the like, and has advantages of providing a nut feeding apparatus with a simpler structure at a low cost, thus greatly contributing to the development of the industry in question.

## Claims

1. A feeding apparatus for feeding nuts or the like, comprising:
a conductor cylinder (1) having a feeder opening (2) provided at a lower side wall of the conductor cylinder (1) and into which nuts or the like are continuously fed;
a plunger (21) slidably received in the conductor cylinder (1) for up and down movement in the conductor cylinder (1), and
support means in the conductor cylinder (1) for temporarily supporting nuts or the like fed into the conductor cylinder (1) from the feeder opening (2);
characterised in that:
support bar guide holes (3) are provided in said conductor cylinder (1) for receiving support bars which serve temporarily to support nuts or the like fed into the conductor cylinder (1) from the feeder opening (2);
ball recesses (4) are formed in the conductor cylinder (1) and located above the support bar guide holes (3);
balls (5) having a diameter slightly larger than the thickness of a wall of the conductor cylinder (1) are accommodated in respective said ball recesses (4);
leaf springs (12) are attached to an outer surface of the conductor cylinder (1);
first and second support bars (11) are slidably mounted in the support bar guide holes (3) for temporarily and horizontally supporting a single nut or the like fed into the conductor cylinder (1) from the feeder opening (2), each support bar (11) having an outer end portion coupled to an associated one of the leaf springs (12), the leaf springs (12) urging the respective support bars (11) inwardly toward the interior of the conductor cylinder (1);
wherein the plunger (21) has guide grooves (22) at a lower portion thereof for engaging the balls (5) and pushing the engaged balls outward of the conductor cylinder (1) when the plunger is moved downwardly in the conductor cylinder (1), thereby causing the support bars (11) to release a supported nut or the like and to eject the released nut or the like from the conductor cylinder.

2. A feeding apparatus according to Claim 1, characterized in that each of the leaf springs (12) comprises a lamination of a plurality of thin spring plates.

3. A feeding apparatus according to Claim 1 or Claim 2 characterized by a pair of said ball recesses (4) and respective said balls (5) arranged on opposite sides of the conductor cylinder (1); and wherein the plunger (21) has a pair of the guide grooves (22) formed on opposite sides of the lower portion of the plunger (21) for engaging respective said balls (5).

4. A feeding apparatus according to Claim 3, characterized in that the balls (5), when moved outwardly during engagement with the plunger (21), resiliently move the leaf springs (12) outwardly of the conductor cylinder (1) for thereby slidably moving the support bars (11) out of engagement with the single nut or the like, to thereby release the single nut or the like and to permit the released single nut or the like to be ejected.

5. A feeding apparatus according to any one of Claims 1 to 4 characterized in that the support bars (11) engage portions of the single nut or the like to support the single nut or the like in the conductor cylinder (1).

## Patentansprüche

1. Zuführvorrichtung zum Zuführen von Muttern od.dgl., bestehend aus:
einem Führungszylinder (1) mit einer Zuführöffnung (2), die an einer unteren Seitenwand des Führungszylinders (1) vorgesehen ist und in welche Muttern od.dgl. kontinuierlich zugeführt werden;
einem Kolben (21), der in dem Führungszylinder (1) für eine Auf- und Abwärtsbewegung in dem Führungszylinder (1) verschiebbar aufgenommen ist, und
einer Abstützeinrichtung in dem Führungszylinder (1) für ein vorübergehendes Abstützen von Muttern od.dgl., die in den Führungszylinder (1) von der Zuführöffnung (2) zugeführt sind;
dadurch gekennzeichnet, daß
in dem Führungszylinder (1) Stützriegel-Führungslöcher (3) zur Aufnahme von Stützriegeln vorgesehen sind, die für ein vorübergehendes Abstützen von Muttern od.dgl. dienen, die in den Führungszylinder (1) von der Zuführöffnung (2) zugeführt sind;
Kugelaussparungen (4) in dem Führungszylinder (1) ausgebildet und oberhalb der Stützriegel-Führungslöcher (3) angeordnet sind;
Kugeln (5) mit einem Durchmesser etwas größer als die Wanddicke des Führungszylinders (1) in den einzelnen Kugelaussparungen (4) aufgenommen sind;
Blattfedern (12) an der Außenfläche des Führungszylinders (1) befestigt sind;
erste und zweite Stützriegel (11) in den Stützriegel-Führungslöchern (3) für ein vorübergehendes und horizontales Abstützen einer in den Führungszylinder (1) von der Zuführöffnung (2) zugeführten einzigen Mutter od.dgl. verschiebbar montiert sind, wobei jeder Stützriegel (11) mit einem äußeren Endteil mit einer zugeordneten Blattfeder (12) gekuppelt ist und die Blattfeder (12) die betreffenden Stützriegel (11) nach innen gegen das Innere des Führungszylinders (1) drücken;
wobei der Kolben (21) Führungsnuten (22) an seinem unteren Teil für einen Eingriff mit den Kugeln (5) aufweist und die im Eingriff befindlichen Kugeln nach der Außenseite des Führungszylinders (1) drückt, wenn der Kolben in dem Führungszylinder (1) nach unten bewegt wird, wodurch die Stützriegel (11) zur Freigabe einer abgestützten Mutter od.dgl. und zum Ausstoßen der freigegebenen Mutter od.dgl. von dem Führungszylinder veranlaßt werden.

2. Zuführvorrichtung nach Anspruch 1, dadurch gekennzeichnet, daß jede der Blattfedern (12) aus einem Laminat einer Vielzahl von dünnen Federplatten besteht.

3. Zuführvorrichtung nach Anspruch 1 oder Anspruch 2, dadurch gekennzeichnet, daß ein Paar der Kugelaussparungen (4) und der betreffenden Kugeln (5) an gegenüberliegenden Seiten des Führungszylinders (1) angeordnet ist, wobei der Kolben (21) ein Paar Führungsnuten (22) hat, die an gegenüberliegenden Seiten des unteren Teils des Kolbens (21) für einen Eingriff mit den Kugeln (5) ausgebildet sind.

4. Zuführvorrichtung nach Anspruch 3, dadurch gekennzeichnet, daß die Kugeln (5) bei der Bewegung nach außen während des Eingriffs mit dem Kolben (21) die Blattfedern (12) elastisch-nachgiebig nach der Außenseite des Führungszylinders (1) bewegen, um dadurch die Stützriegel (11) aus ihrem Eingriff mit der einzigen Mutter od.dgl. verschieblich zu bewegen und dadurch die einzige Mutter od.dgl. freizugeben und einen Ausstoß der freigegebenen einzigen Mutter od.dgl. zu erlauben.

5. Zuführvorrichtung nach einem der Ansprüche 1 bis 4, dadurch gekennzeichnet, daß die Stützriegel (11) mit Teilen der einzigen Mutter od.dgl. im Eingriff sind, um die einzige Mutter od.dgl. in dem Führungszylinder (1) zu stützen.

## Revendications

1. Dispositif d'alimentation pour délivrer des écrous ou objets similaires, comprenant:
un cylindre conducteur (1), ayant un orifice d'alimentation (2) prévu sur une paroi latérale inférieure de ce cylindre (1) et dans lequel des écrous ou objets similaires sont alimentés de façon continue;
un piston (21) reçu à coulissement dans le cylindre (1) pour effectuer un mouvement de haut en bas dans ce cylindre, et
des moyens de maintien dans le cylindre (1) pour supporter temporairement les écrous ou objets similaires alimentés dans ce cylindre (1) à partir de l'orifice d'alimentation (2) ;
caractérisé en ce que:
des trous de guidage (3) de barres de support sont prévus dans le cylindre (1) afin de recevoir ces barres qui servent temporairement à maintenir les écrous ou objets similaires alimentés dans le cylindre (1) à partir de l'orifice d'alimentation (2);
des échancrures à bille (4) sont formées dans le cylindre (1) et sont situées au-dessus des trous de guidage (3) des barres;
des billes (5) , ayant un diamètre légèrement supérieur à l'épaisseur de la paroi du cylindre (1) sont logées dans les échancrures (4) respectives;
des ressorts à lames (12) sont fixés sur une face extérieure du cylindre (1);
des première et seconde barres de support (11) sont montées à coulissement dans les trous de guidage (3) de ces barres afin de maintenir temporairement et horizontalement un écrou unique ou un objet similaire, alimenté dans le cylindre (1) à partir de l'ouverture d'alimentation (2), chaque barre (11) ayant une partie extrémité extérieure couplée à une partie d'extrémité extérieure associée des ressorts (12), ces ressorts comprimant les barres (11) respectives vers l'intérieur du cylindre (1);
dans lequel le piston (21) a des gorges de guidage (22) situées sur une partie inférieure de celui-ci permettant d'enclencher les billes (5) et de pousser les billes enclenchées hors du cylindre conducteur (1) lorsque le piston est déplacé vers le bas dans le cylindre conducteur (1), obligeant ainsi les barres de maintien (11) à libérer un écrou ou objet similaire maintenu et d'expulser du cylindre conducteur l'écrou ou objet similaire libéré.

2. Dispositif d'alimentation selon la revendication 1, caractérisé en ce que chacun des ressorts (12) comprend une superposition d'une pluralité de fines lames de ressort.

3. Dispositif d'alimentation selon la revendication 1 ou la revendication 2, caractérisé par une paire d'échancrures (4) et de billes (5) respectives, disposées sur des côtés opposés du cylindre (1); et dans lequel le piston (21) comporte une paire de gorges de guidage (22), formées sur des côtés opposés de la partie inférieure du piston (21), permettant d'enclencher les billes (5) respectives.

4. Dispositf d'alimentation selon la revendication 3, caractérisé en ce que les billes (5), lorsqu'elles sont délogées durant l'enclenchement avec le piston (21), repoussent les ressorts (12) de manière élastique hors du cylindre (1), de façon à ce que les barres (11) se désenclenchent par coulissement de l'écrou unique ou de l'objet similaire, pour le libérer et permettre son expulsion.

5. Dispositif d'alimentation selon l'une quelconque des revendications 1 à 4, caractérisé en ce que les barres (11) s'enclenchent sur des parties de l'écrou unique ou de l'objet similaire pour le maintenir dans le cylindre (1).
